# EUROPÄISCHE PATENTSCHRIFT

(11) **EP 1 814 273 B1**
(45) Veröffentlichungstag und Bekanntmachung des Hinweises auf die Patenterteilung: **20.04.2011**
(21) Anmeldenummer: 06019750.6
(22) Anmeldetag: 21.09.2006
(51) Int. Cl.: H04L 25/02

(54) **Schaltungsanordnung zum galvanischen Trennen von Signalleitungen**
Circuit arrangement for galvanic isolation of signal lines
Arrangement de circuit pour l'isolation galvanique des lignes de signal

(30) Priorität: 26.01.2006 DE 102006003952
(43) Veröffentlichungstag der Anmeldung: 01.08.2007
(73) Patentinhaber: VEGA Grieshaber KG, 77709 Wolfach (DE)
(72) Erfinder: Wöhrle, Siegbert, 77761 Schiltach (DE)
(74) Vertreter: Patentanwälte Westphal, Mussgnug & Partner

(56) Entgegenhaltungen:
- EP-A- 0 798 885
- EP-A- 0 875 765
- DE-A1- 19 925 909

## Beschreibung

Die Erfindung bezieht sich auf eine Schaltungsanordnung zum galvanischen Trennen von Signalleitungen gemäß den oberbegrifflichen Merkmalen von Anspruch 1.

In vielen Anwendungen ist eine galvanischen Trennung von Stromkreisen erforderlich. Beispielsweise sollten, um in einer Anwendung beim Zusammenschalten mehrerer Sensoren in einer Anlage flexibel zu sein, die Ausgängen solcher Sensoren jeweils galvanisch von einer Versorgungsleitung getrennt sein. Weiterhin müssen Stromkreise, welche in explosionsgefährdeten Umgebungen angeordnet sind und in der sogenannten Zündschutzart Eigensicherheit ausgeführt sind, galvanisch von anderen Stromkreisen getrennt sein. Üblicherweise werden solche Stromkreise durch Optokoppler galvanisch voneinander getrennt. Nachteilhaft ist dabei, dass für eine Übertragung schneller Wechselsignale die Optokoppler mit sehr viel Strom betrieben werden müssen, damit das Ausgangssignal nicht verzögert und verzerrt ist. Insbesondere ist ein Einsatz einer solchen und weiterer bekannter Schaltungsanordnungen bei Zweileiter-Sensoren mit z. B. einer 4 - 20 mA-Schnittstelle mangels eines entsprechenden umzusetzenden Stroms nicht einsetzbar.

Beispielsweise ist aus US 5,995,252 eine Schaltungsanordnung bekannt, mit der schnelle Wechselsignale bei relativ geringer Verlustleistung galvanisch getrennt werden können. Von einem Eingang aus wird ein Eingangssignal über einen Kondensator und einen ohmschen Widerstand an zwei Optokoppler angelegt, von denen einer auf positive und einer auf negative Eingangssignalanteile anspricht. Die Ausgänge der Optokoppler werden zusammengeführt und einem Puffer mit zum Puffer parallel geschaltetem ohmschen Widerstand angelegt, um ein Ausgangssignal bereitzustellen. Nachteilhaft ist an dieser Schaltungsanordnung, dass dieses sich jedoch nur für Wechselspannungssignale eignet.

Das Dokument EP 875 765 A offenbart eine Schaltungsanordnung zum galvanischen Trennen von Signalleitungen. Ein erster niederfrequenter Zweig koppelt Ein- und Ausgang mit einem Optokoppler, ein zweiter höherfrequenter koppelt sie galvanisch getrennt durch einen Übertrager.

Aus EP 798 885 A ist eine Schaltungsanordnung zur galvanischen Trennung von Übertragungswegen bekannt, bei der ein Zweig optisch gekoppelt ist, ein weiterer parallel dazu durch einen Kondensator.

Das Dokument DE 199 25 909 offenbart eine Schnittstelle mit galvanischer Trennung der Signale durch Kondensatoren, Übertrager oder Optokoppler, sowie deren Vorzüge bzw. Nachteile.

Die Aufgabe der Erfindung besteht darin, eine Schaltungsanordnung vorzuschlagen, welche bei geringer Verlustleistung sowohl Gleich- als auch Wechselsignale bzw. entsprechende Spannungssignale übertragen kann.

Diese Aufgabe wird durch eine Schaltungsanordnung mit den Merkmalen gemäß Anspruch 1 gelöst. Vorteilhafte Ausgestaltungen sind Gegenstand von abhängigen Ansprüchen.

Bevorzugt wird demgemäss eine Schaltungsanordnung zum galvanischen Trennen von Signalleitungen mit einem Eingang zum Anlegen eines Eingangssignals, einem Ausgang zum Ausgeben eines Ausgangssignals und einem ersten Zweig mit einem Optokoppler zum optischen Koppeln des Eingangs mit dem Ausgang, wobei der Eingang und der Ausgang über einen zweiten Zweig mit zumindest einer galvanisch trennenden Komponente zum Übertragen dynamischer Anteile des Eingangssignals verbunden sind. Konkretisiert wird die Trennung über den zweiten Zweig mit einem Kondensator umgesetzt. Zwischen einen ausgangsseitigen Anschluss des Kondensators und einen Ausgang des Optokopplers wird vorzugsweise eine Pufferschaltung geschaltet, welche den Einsatz eines kleiner dimensionierten Kondensators ermöglicht. Die Pufferschaltung weist ausgangsseitig bevorzugt einen zweiten Kondensator auf. Die Pufferschaltung weist eingangsseitig vorzugsweise einen Puffer, insbesondere in Form eines Verstärkers, mit dazu parallel geschaltetem ohmschen Widerstand auf. Der zur galvanischen Trennung verwendete Kondensator kann bei einer solchen Anordnung vorzugsweise einen kleinen Kapazitätswert kleiner 1 nF aufweisen.

Ein Ausführungsbeispiel wird nachfolgend anhand der Zeichnung näher erläutert. Es zeigen:
- Fig. 1: eine erste beispielhafte Schaltungsanordnung zum galvanischen Trennen von Signalleitungen und
- Fig. 2: eine zweite, gegenüber der ersten Schaltungsanordnung modifizierte Schaltungsanordnung.

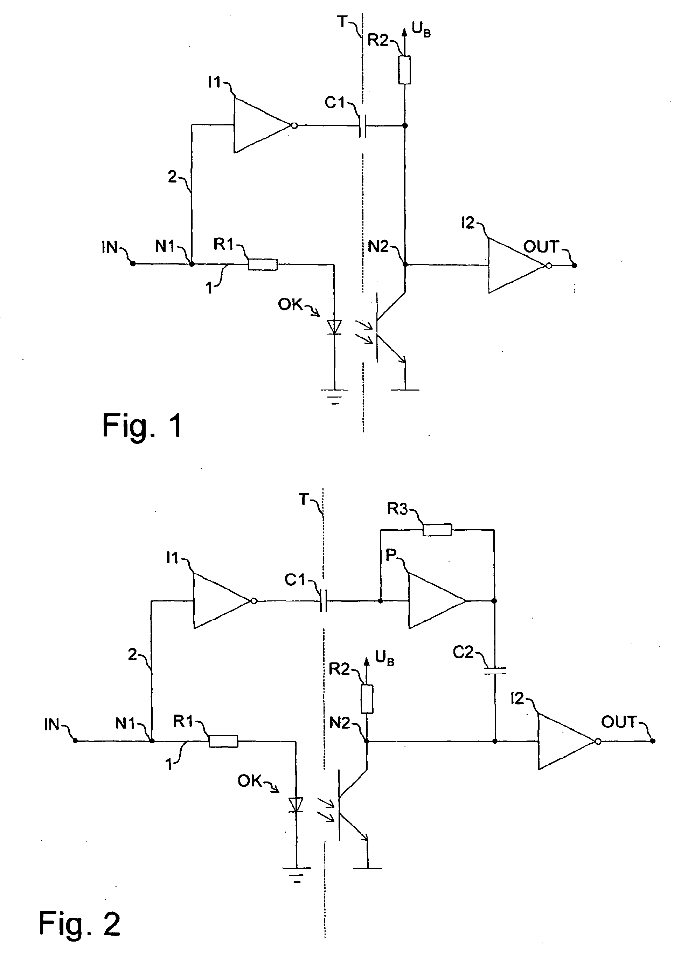

Fig. 1 zeigt beispielhaft Komponenten einer Schaltungsanordnung zum galvanischen Trennen von Signalleitungen, wobei lediglich für das Verständnis des Grundprinzips erforderliche Komponenten skizziert sind. Im Rahmen von Modifikationen können zusätzliche Komponenten eingesetzt werden, beispielsweise zur Signalmodifikation oder Signalverzögerung.

Von einem Eingang IN wird ein Eingangssignal an einem ersten Knoten N1 angelegt. Der Eingang IN ist über den ersten Knoten N1 und an einen ersten ohmschen Widerstand R1 an einen Optokoppler OK angelegt. Ein Ausgang des Optokopplers OK ist an einen zweiten Knoten N2 angelegt. Zwischen den zweiten Knoten N2 und eine Versorgungsspannung U_{B} ist ein zweiter ohmscher Widerstand R2 geschaltet, um einen kleinen Strom zur Erfassung des Zustands des Optokopplers OK bereitzustellen. Der zweite Knoten N2 kann bereits einen Ausgang bilden. Die dargestellten Komponenten beschreiben einen ersten Zweig 1 der Schaltungsanordnung zum Übertragen von statischen Anteilen des Eingangsignals.

Ein zweiter Zweig 2 zum Übertragen dynamischer Anteile, welche aus den Flanken des Eingangssignals bestehen, führt vom ersten Knoten N1 bzw. dem Eingang IN über einen Inverter I1 und einen Kondensator C1 zum zweiten Knoten N2. Bei einer solchen Schaltungsanordnung erfolgt die galvanische Trennung T somit sowohl einerseits über den Optokoppler OK als auch andererseits über den Kondensator C1.

Vorzugsweise ist zwischen den zweiten Knoten N2 und einen Ausgang OUT ein Ausgangs-Inverter 12 geschaltet.

Bei dieser ersten Schaltungsanordnung wird somit ein Wechselsignal vom Eingang IN direkt über den Kondensator C1 ohne eine Pufferung über den zweiten Zweig 2 zusammen mit dem statischen Signal vom Optokoppler OK über den ersten Zweig 1 auf den Ausgangs-Inverter I2 gegeben. In einer solchen Ausführung weist der Kondensator C1 zweckmäßigerweise einen relativ großen Wert mit z. B. 100 nF auf. Je nach geforderter Spannungsfestigkeit der galvanischen Trennung führt dies jedoch zu einer sehr großen Bauform für den Kondensator C1.

Fig. 2 zeigt eine Schaltungsanordnung, welche die Verwendung eines Kondensators C1 mit einem kleineren Kapazitätswert ermöglicht. Zur Vermeidung von Wiederholungen werden nachfolgend lediglich Unterschiede zu der Schaltung gemäß Fig. 1 beschrieben. Während der erste Zweig 1 unverändert aufgebaut sein kann, weist der zweite Zweig 2 sekundärseitig zwischen dem Kondensator C1 und dem zweiten Knoten N2 eine Pufferschaltung auf. Die Pufferschaltung besteht aus einem Puffer P in Form beispielsweise eines Verstärkers und einem dem Puffer P nachgeschalteten zweiten Kondensator C2. Dem Puffer P ist zweckmäßigerweise ein dritter ohmscher Widerstand R3 parallel geschaltet.

Die Übertragung des statischen Zustands des Eingangssignal erfolgt wieder über die bekannte Art mit dem Optokoppler OK, welcher über den ersten Widerstand R1 angesteuert wird. Da es sich hierbei nur um einen zu übertragenden Zustand hoch (HIGH) oder tief (LOW) handelt, ist nur ein kleiner Ansteuerstrom erforderlich. Auf der sekundären Seite des ersten Zweigs 1 genügt ebenfalls ein kleiner Strom über den zweiten Widerstand R2, um den Zustand des Optokopplers OK zu erfassen. Mit dem Ausgangs-Inverter 12 wird die Polarität korrigiert, so dass das Eingangssignal und das Ausgangssignal denselben Zustand aufweisen. Der erste Zweig 1 dient somit nur zur Übertragung von statischen oder sich sehr langsam ändernden Wechselspannungen.

Um für schnellere Wechselsignale die Flanken zu korrigieren, werden in dem zweiten Zweig 2 die dynamischen Anteile des Eingangssignals übertragen. Zur galvanischen Trennung wird dazu der Kondensator C1 verwendet, welcher über den vorgeschalteten Inverter 11 angesteuert wird. Da über den zweiten Zweig 2 nur die Flanke übertragen werden muss, reicht hierzu bei der Schaltungsanordnung gemäß Fig. 2 eine relativ kleine Kapazität von z. B. 100 pF, also eine Kapazität von vorzugsweise weniger als 1 nF aus. Dies ist von Vorteil, da der Kondensator C1 die Spannungsfestigkeit besitzen muss, für welche die Potenzialtrennung der Schaltungsanordnung ausgelegt ist. Dadurch ergibt sich eine kleine Baugröße für den Kondensator C1. Dies wird dadurch ermöglicht, dass auf der Sekundärseite des zweiten Zweiges 2 die Flanken des Einganssignals von dem Puffer P erfasst werden. Über den zum Puffer P parallel geschalteten dritten Widerstand R3 erfolgt eine Mitkopplung, so dass eine Selbsthaltung des jeweiligen Zustandes gewährleistet ist. Das Ausgangssignal der parallel geschalteten Anordnung auf dem Puffer P und dem dritten Widerstand R3 wird über den zweiten Kondensator C2 zusammen mit dem statischen Signal vom Optokoppler OK auf den Ausgangs-Inverter I2 gegeben.

## Patentansprüche

1. Schaltungsanordnung zum galvanischen Trennen von Signalleitungen mit
- einem Eingang (IN) zum Anlegen eines Eingangsignals,
- einem Ausgang (OUT) zum Ausgeben eines Ausgangssignals und
- einem ersten Zweig (1) mit einem Optokoppler (OK) zum optischen Koppeln des Eingangs (IN) mit dem Ausgang (OUT), wobei
- der Eingang (IN) und der Ausgang (OUT) über einen zweiten Zweig (2) mit einem Kondensator (C1) galvanisch getrennt verbunden sind
**dadurch gekennzeichnet, dass**
dem ausgangsseitigen Anschluss des Kondensators (C1) eine Pufferschaltung (P, R3, C2) nach geschaltet ist, deren Ausgang mit dem Ausgang des Optokopplers verbunden ist.

2. Schaltungsanordnung nach Anspruch 1, bei der zwischen den Eingang (IN) und den Kondensator (C1) ein Inverter (I1) zum Ansteuern des Kondensators (C1) geschaltet ist.

3. Schaltungsanordnung nach einem der Ansprüche 1 bis 2, bei welcher dem Optokoppler (OK) ein erster ohmscher Widerstand (R1) zum Ansteuern vorgeschaltet und ein zweiter ohmscher Widerstand (R2) zum Erfassen des Zustands nachgeschaltet ist.

4. Schaltungsanordnung nach Anspruch 1, bei welcher die Pufferschaltung ausgangsseitig einen zweiten Kondensator (C2) aufweist.

5. Schaltungsanordnung nach einem der Ansprüche 1 bis 4, bei welcher die Pufferschaltung eingangsseitig einen einen Verstärker, mit dazu parallel geschaltetem ohmschen Widerstand (R3) aufweist.

6. Schaltungsanordnung nach einem der Ansprüche 1 bis 5, bei welcher der Kondensator (C1) einen kleinen Kapazitätswert kleiner 1 nF aufweist.

## Claims

1. A circuit arrangement for the galvanic isolation of signal lines with
- an input (IN) for the application of an input signal,
- an output (OUT) for the delivery of an output signal, and
- a first branch (I) with an optical coupler (CK) for the optical coupling of the input (IN) to the output (OUT), wherein
- the input (IN) and the output (OUT) are galvanically isolated from each other by way of a second branch (2) with a capacitor (C1),
**characterized in that** a buffer circuit (P, R3, C2), the output of which is connected to the output of the optical coupler, is connected downstream of the terminal of the capacitor (C1) on the output side.

2. A circuit arrangement according to claim 1, in which an inverter (T1) for actuating the capacitor (C1) is connected between the input (IN) and the capacitor (C1).

3. A circuit arrangement according to one of claims 1 to 2, in which a first ohmic resistor (R1) for actuation is connected upstream of the optical coupler (OK) and a second ohmic resistor (R2) for the detection of the state is connected downstream.

4. A circuit arrangement according to claim 1, in which the buffer circuit has a second capacitor (C2) on the output side.

5. A circuit arrangement according to any one of claims 1 to 4, in which the buffer circuit has on the input side an amplifier with an formic resistor (R3) connected in parallel thereto.

6. A circuit arrangement according to any ore of claims 1 to 5, in which the capacitor (C1) has a low capacitance value of less than 1 nF.

## Revendications

1. Montage de séparation galvanique de lignes de transmission de signaux comprenant :
- une entrée (IN) pour appliquer un signal d'entrée,
- une sortie (OUT) pour fournir un signal de sortie, et
- une première branche (1) avec un coupleur optique (OK) pour le couplage optique de l'entrée (IN) à la sortie (OUT), et
- l'entrée (IN) et la sortie (OUT) sont reliées de manière découplée galvaniquement par une seconde branche (2) avec un condensateur (C1),
montage **caractérisé en ce que**
le branchement côté sortie du condensateur (C1) est suivi d'un circuit tampon (P, R3, C2) dont la sortie est reliée à la sortie du coupleur optique.

2. Montage selon la revendication 1,
dans lequel
un inverseur (I1) pour commander le condensateur (C1) est branché entre l'entrée (IN) et le condensateur (C1).

3. Montage selon les revendications 1 à 2,
**caractérisé en ce que**
le coupleur optique (OK) est précédé d'une première résistance ohmique (R1) pour la commande et il est suivi d'une seconde résistance ohmique (R2) pour saisir l'état.

4. Montage selon la revendication 1,
**caractérisé en ce que**
le circuit tampon comporte en sortie un second condensateur (C2).

5. Montage selon l'une des revendications 1 à 4,
**caractérisé en ce que**
le circuit tampon comporte côté entrée, un amplificateur avec une résistance ohmique (R3) branchée en parallèle.

6. Montage selon l'une des revendications 1 à 5,
**caractérisé en ce que**
le condensateur (C1) a une petite capacité inférieure à 1 nF.
